# EUROPEAN PATENT SPECIFICATION

(11) **EP 3 863 798 B1**
(45) Date of publication and mention of the grant of the patent: **16.11.2022**
(21) Application number: 19783330.4
(22) Date of filing: 10.10.2019
(51) Int. Cl.: B24B 37/08, B24B 7/17

(54) **AN APPARATUS FOR WORKING OPPOSITE ARRANGED SURFACES**
VORRICHTUNG ZUM BEARBEITEN GEGENÜBERLIEGENDER FLÄCHEN
APPAREIL POUR TRAVAILLER DES SURFACES OPPOSEES

(30) Priority: 10.10.2018 EP 18199655
(43) Date of publication of application: 18.08.2021
(73) Proprietor: LS Flexo ApS, 5800 Nyborg (DK)
(72) Inventor: SIMONSEN, Lars, Schantz, 5800 Nyborg (DK)
(74) Representative: Inspicos P/S
(86) International application number: PCT/EP2019/077457
(87) International publication number: WO 2020/074634

(56) References cited:
- US-A- 5 800 252
- US-B1- 6 176 113

## Description

### Field of the invention

The present invention relates to an apparatus for polishing, cleaning, sanding, or otherwise working oppositely arranged surfaces of a pressing section.

### Background of the invention

Die cutting machines are used to produce paperboards in large volumes. Traditionally, die cutting machines comprise a pressing tool/pressing section with two oppositely arranged plates; often referred to as "platen", where a tool with shaped knifes are arranged on the upper plate/platen. When the platen are pressed towards each other, paperboards arranged between the upper and lower platen are cut into required shape. To produce components of high quality, the pressing surfaces must be clean and smooth. However, during the production, the pressing surfaces are worn, and maintenance is required. Additionally, moisture absorbed by the paperboards may be deposited on the platen or may vaporise during the process, thereby subjecting the platen to moisture. As the platen traditionally are made of metal, the platen may corrode. Corrosion particles may provide an uneven surface of the platen, thereby requiring maintenance.

Prior art document US 5,800,252 discloses a honing device connected to a source of pressurized fluid for machining a wall of a bore hole or similar interior of a workpiece. The honing device includes a tool mandrel connected in a cantilevered arrangement to a machine for rotating machining operations. A rigid honing member is secured to the tool mandrel, and configured such that the effective diameter of the substantially rigid abrasive outer surface of the honing member can be uniformly and precisely varied in a radial direction relative to the longitudinal axis of the tool in response to pressure on the interior surface of the honing member. A fluid distribution system formed in the tool mandrel in a predetermined arrangement is in fluid communication with the source of pressurized fluid, and includes a pressure chamber that is configured to apply fluid pressure to the interior surface of the honing member. At least one passage extends through the honing member from the pressure chamber and has an opening on the exterior surface of the honing member for delivering fluid to dissipate heat energy and remove debris.

### Description of the invention

It is an object of embodiments of the invention to provide an improved apparatus for working surfaces of a pressing section.

According to a first aspect, the invention provides an apparatus for working oppositely arranged first and second surfaces of a pressing section of die cutting machines by means of sanding, polishing, cleaning, and the like, the apparatus comprising:
- an upper working unit forming a top wall and an upper sidewall extending downwardly from the top wall;
- a lower working unit forming a bottom wall and a lower sidewall extending upwardly from the bottom wall; and
- an inflatable bellows movable between an inflated state and a deflated state by inflation with an inflation medium;
wherein the upper sidewall is arranged to guide the lower sidewall to thereby form an internal space enclosed by the top wall, the bottom wall, the upper sidewall, and the lower sidewall, and wherein the inflatable bellows is arranged in the internal space to facilitate variation of the distance between the top wall and the bottom wall during relative movement between the upper sidewall and lower sidewall by inflation of the inflatable bellows.

Since the distance between the top wall and the bottom wall can be varied by inflation of the inflatable bellows, it will be possible easily to adapt the apparatus to the size of the gap between the opposite first and second surfaces of the pressing section, and thereby ensure that both the first and second surfaces of the pressing section are polished, cleaned, and/or sanded at the same time without the user having to exert a pressure against each of the surfaces.

It should be understood, that the pressing section may also be referred to as a pressing tool. Additionally, the apparatus can be used for working between surfaces arranged with at a small distance, as the inflation is carried out by use of an inflatable bellows which compared to e.g. cylinders may occupy much less space.

The distance between the top wall and the bottom wall may in one embodiment vary between 20 mm and 50 mm, such as between 20 mm and 100 mm, such as between 20 mm and 250 mm, or even more. In an alternative embodiment, the distance between the top wall and the bottom wall may vary between 35 mm and 50 mm, such as between 35 mm and 100 mm, such as between 35 mm and 250 mm, or even more. The lower value corresponds to the distance between the top wall and the bottom wall when the inflatable bellows is in the deflated state, whereas the higher value corresponds to the distance between the top wall and the bottom wall when the inflatable bellows is in the inflated state. The lower distance of 20 mm and 35 mm are two different examples of an apparatus. It should be understood that this distance may be different in an alternative embodiment. As an example, the lower distance may be 10 mm for working of oppositely arranged surface of a smaller pressing section. In such an embodiment, the distance may e.g. vary between 10 mm and 20 mm.

In the context of the present invention, the term "working" should be understood as a process during which the first and/or second oppositely arranged surfaces of a pressing section are polished, cleaned, sanded, or otherwise conditioned by movement of the apparatus relative to the first and/or second surfaces. It should, however, be understood that the invention is not limited to pressing section, as the apparatus for working may also be used to work oppositely arranged surface of other tools/machines.

It should be understood, that the apparatus may be positioned upside-down, whereby the upper working unit and the lower working unit may change position. I.e. the terms "upper working unit" and "lower working unit" imply no limitation with regard to apparatus.

Thus, the apparatus for working may be arranged between the first and second oppositely arranged surfaces by arranging the bottom wall on the lower one of the first and second surfaces and with the top wall facing the other one of the first and second surfaces.

The apparatus comprises an upper working unit which forms a top wall and an upper sidewall extending downwardly from the top wall, whereby the upper working unit may be in the form of an open container with the opening facing downwards and the top wall constituting the bottom of the container. By the term "extending downwardly" from the top wall should in the context of the present invention be understood, that the upper sideward extends substantially perpendicular from the top wall.

Additionally, the apparatus comprises a lower working unit which forms a bottom wall and a lower sidewall extending upwardly from the bottom wall; whereby the lower working unit may be in the form of an open container with the opening facing upwards and the bottom wall constituting the bottom of the container. By the term "extending upwardly" from the bottom wall should in the context of the present invention be understood, that the lower sidewall extends substantially perpendicular from the bottom wall.

In one embodiment, the upper working unit and/or the lower working unit may be made in one piece. In an alternative embodiment at least one of the upper working unit and the lower working unit may be made of at least two separate pieces which may subsequently be joined to form the upper working unit and/or the lower working unit. As an example, the bottom wall and the lower sidewall may be made as separate elements which are subsequently joined.

As the oppositely arranged first and second surfaces of the pressing section may advantageously be arranged substantially parallel to each other, it may be an advantage if the top wall and the bottom wall are arranged substantially parallel to each other to thereby facilitate simultaneously working of the first and second surfaces of the pressing section. The top wall and the bottom wall may be arranged at an angle of 5 degrees relative to each other, such as an angle of 4 degrees, such as an angle of 3 degrees or less when inflating the inflatable bellows.

The upper sidewall is arranged to guide the lower sidewall to thereby form an internal space enclosed by the top wall, the bottom wall, the upper sidewall, and the lower sidewall. By the term "guide" is in the context of the present invention understood that the upper sidewall provides a limitation of movement of the lower sidewall in a direction transverse to the sidewall. It should be understood, that the lower sidewall may likewise provide a limitation of the movement of the upper sidewall.

In the context of the present invention, the term "inflation direction" should be understood as the direction in which the distance between the top wall and the bottom wall is increased during inflation of the inflatable bellows. The upper and lower sidewalls may in one embodiment extend substantially along the inflation direction, as the upper and lower sidewalls may extend substantially perpendicular to the top wall and the bottom wall.

Guiding may be achieved by providing the upper working unit and the lower working unit with substantially the same shape whereby at least a part of the lower working unit may be inserted into upper working unit to thereby form the internal space. It should be understood that this may likewise be achieved by inserting at least a part of the upper working unit into the lower working unit. Thus, the upper working unit and the lower working unit may be of substantially the same shape, where e.g. the size of the upper working unit is larger than the lower working unit to allow the lower working unit to be inserted at least partly into the upper working unit.

In one embodiment, the upper sidewall may be arranged in sliding contact with the lower sidewall, or at least a part of the upper sidewall may be arranged in sliding contact with the lower sidewall.

The top wall and/or the bottom wall may be square-shaped, oval, triangular, or of any other shape. However to facilitate guiding of the lower sidewall by the upper sidewall, it may be an advantage if the top wall and the bottom wall are of substantially the same shape.

Guiding may alternatively or additionally be achieved by providing at least a part of the upper sidewall and the lower sidewall with a matching form which may be particularly relevant in embodiments where the top wall and the bottom wall are of different shape.

In one embodiment, the upper working unit may comprise at least on guiding opening into which a guiding rod of matching shape formed at or attached to the lower working unit may be inserted. During inflation of the inflatable bellows, the size of the overlap between the guiding opening and the guiding rod may be decreased. During deflation the size of the overlap between the guiding opening and the guiding rod may be increased.

The inflatable bellows is arranged in the internal space formed by the upper and lower working units to thereby facilitate variation of the distance between the top wall and the bottom wall during relative movement between the upper sidewall and lower sidewall by inflation of the inflatable bellows. The distance between the top wall and the bottom wall may consequently be increased by inflating the bellows as the inflated bellows may exert a pressure on the backside surface on each of the top wall and the bottom wall, where the upper backside surface is the opposite side of the top wall and the lower backside surface is the opposite side of the bottom wall. When subsequently deflating the inflatable bellows the distance may be decreased.

During inflation the upper sidewall and the lower sidewall move relative to each other, e.g. by decreasing an overlap between the upper and lower sidewalls.

An inflation opening may be arranged in the upper working unit and/or in the lower working unit to thereby provide an inlet for the inflation medium to enable inflation of the inflatable bellows. Particularly, the inflatable medium may be compressed air or a liquid, such as water or oil.

To facilitate working, the apparatus may further comprise a handle attached to the upper working unit, the lower working unit, or both working units. The handle may be an elongated element having a free end at which a user may hold and operate the apparatus, and an opposite end being attached to the upper working unit and/or the lower working unit. In one embodiment, the handle may comprise a telescopic part to facilitate working of different areas of the pressing section without the operator/user of the apparatus has to move significantly.

In one embodiment, inflation of the inflatable bellows may be performed by use of a compressor. The compressor may via a tube be in fluid connection with the inflatable bellows to allow inflation hereof. Additionally, the compressor may be operatively connected to the handle. Consequently, the pressure of the inflation medium may be controlled at the handle when moving the apparatus between the first and second opposite surfaces of the pressing section. A flexible tube for feeding the inflation medium in the form of a fluid, such as compressed air, to the inflatable bellows may as an example be arranged inside a cavity in the handle.

In one embodiment, the top wall may form a plane upper working surface, and the bottom wall may form a plane lower working surface. The top wall and the bottom wall may thereby themselves sand, polish, clean, or otherwise condition the first and second surfaces of the pressing section. However, an abrasive paper may be attached to the top and/or bottom wall to facilitate sanding. Furthermore, is may be possible to attach a cloth to the top and/or bottom wall to facilitate polishing. The abrasive paper and/or the cloth may be replaced after use.

In an alternative element, the apparatus may comprise at least one separate working element. To facilitate attachment hereof, the upper working unit may comprise a first locking structure for attachment of an upper working element, and/or the lower working unit may comprise a second locking structure for at attachment of a lower working element.

Each of the separate upper and lower working elements may comprise a plane working surface; i.e. a plane upper working surface and a plane lower working surface. An abrasive paper, a cloth, etc., may be attached to the plane upper and/or lower working surface to facilitate working; such as sanding, polishing, cleaning, and the like.

To facilitate attachment of a separate working element to the upper and/or lower working unit, each of the first locking structure and the second locking structure may be a geometrical locking structure configured to limit movement of the upper and lower working element relative to the upper and lower working unit, respectively. It should be understood, that the first and/or second locking structure may limit movement in a direction transverse to the sidewall or alternatively to both the transverse direction and a direction substantially parallel to the inflation direction.

To facilitate exchange of the upper and/or lower working element, the upper working element and/or the lower working element may be releasably attached to the upper working unit and the lower working unit, respectively.

In one embodiment, the first and/or second locking structure may be formed by an indentation in the upper and/or lower working element and a matching protrusion in the upper working unit and/or the lower working unit. As an example, the protrusion may extend in the inflation direction from the top wall and/or the bottom wall. By providing the indentation and the corresponding protrusion of matching shape, the locking structure may prevent relative movement of the upper working element and the upper working unit and/or prevent relative movement of the lower working element and the lower working unit in a direction transverse to the inflation direction. In this embodiment, the upper/lower working element and working unit may be separated by movement in a direction parallel to the inflation direction.

It should be understood, that the indentation may alternatively be formed in the upper and/or lower working unit and that the matching protrusion may be formed in the upper working element and/or the lower working element.

The upper sidewall may form a top edge extending about an opening into an upper cavity. The lower sidewall may extend into the upper cavity. It should be understood that the lower sidewall may alternatively extend around the upper sidewall, whereby the upper sidewall may extend into a lower cavity formed by the lower sidewall.

In one embodiment, the lower sidewall may form a bottom edge extending about an opening into a lower cavity. The inflatable bellows, in the deflated state may be arranged within the lower cavity. The internal space may be formed by the upper cavity and the lower cavity being arranged in communication, e.g. by arranging the upper working unit above the lower working unit with the upper cavity facing the lower cavity.

By arranging the upper sidewall to form an upper cavity into which the lower sidewall may extend, it may be an advantage if an opening extends along the upper and lower sidewalls between these sidewalls since movement of the upper working unit relative to the lower working unit may be hindered by friction without such an opening. As a large opening between an outer surface of the upper sidewall or the lower sidewall and an inner surface of the opposite one of the upper sidewall and the lower sidewall may result in relative movement between the upper working unit and the lower working unit in a direction transverse to the inflation direction, it may be an advantage if the opening is less than 2.0 mm, such as less than 1.5 mm, such as less than 1.0 mm, such as less than 0.5 mm, or even smaller.

To limit the amount of dirt, oxide particles from corrosion, and other unwanted particles/items entering the internal space via the opening between the upper and lower sidewalls, it may be an advantage if the opening is facing downwards. This may be achieved by arranging the upper sidewall to form an upper cavity into which the lower sidewall may extend. In this embodiment, the opening between the upper sidewall and the lower sidewall is facing downwards.

To keep the inflatable bellows in place during movement of the apparatus and/or during use of the apparatus, the inflatable bellows may be fixed to the lower working unit. In an alternative embodiment, the inflatable bellows may be fixed to the upper working unit or to both the upper and lower working units. In a further alternative embodiment, the inflatable bellows may be arranged in the internal space without fixing it to any of the upper or lower working units.

When deflating the inflatable bellows, the distance between the top wall and the bottom wall may decrease, as the size of the bellows decreases due to the deflation. To speed up the reduction of the distance, the apparatus may further comprise a spring structure arranged between upper working unit and the lower working unit, where the spring structure may bias the top wall towards the bottom wall.

The spring structure may have a strength which can be exceeded by inflation of the inflatable bellows to thereby increase the distance between the top wall and the bottom wall by the inflation. The strength of the spring structure may furthermore be sufficient to reduce the distance when the pressure applied to inflate the bellows has been removed.

Additionally, the spring structure may ensure that the upper working unit and the lower working unit are kept together, e.g. when the apparatus is moved, prepared for use, not in use, etc.

The spring structure may be arranged in the internal space, whereby it may be protected by the upper and lower working units.

The apparatus may further comprise a distance limitation element to ensure that the distance between the top wall and the bottom wall does not exceed a predetermined maximum distance. This may in one embodiment be achieved by the above described spring structure, e.g. by providing the spring structure with a strength which ensures that the maximum distance cannot be exceeded. Alternatively, it may e.g. be achieved by providing a slit in the upper working units which may engage a protrusion at the lower working unit. In a simple embodiment, the protrusion may be provided by a screw.

The apparatus may further comprise an additional inflatable bellows movable between an inflated state and a deflated state by inflation with an inflation medium, wherein the additional inflatable bellows is arranged in the internal space. The additional bellow may be identical to the inflatable bellow, or may alternatively be of another size and/or shape. It should be understood that the apparatus may comprises more than one additional bellows, whereby the apparatus may comprise a single inflatable bellows, two inflatable bellows, three inflatable bellows, or even more inflatable bellows.

In embodiment with a plurality of inflatable bellows, some of the inflatable bellows may be identical, whereas others may be of different shape and/or size.

The additional inflatable bellows may be arranged between the top wall and the inflatable bellows. Consequently, the additional inflatable bellow may be arranged on top of the inflatable bellow in a substantial vertical direction, whereby inflation of both the inflatable bellows and the additional inflatable bellows may increase the distance between the top wall and the bottom wall.

In should be understood, that the additional inflatable bellows in an alternative embodiment may be arranged below the inflatable bellows.

Alternatively, the additional inflatable bellows may be arranged adjacent to the inflatable bellows. Consequently, the additional inflatable bellow may be arranged next to the inflatable bellow in a substantial horizontal direction, whereby inflation of both the inflatable bellows and the additional inflatable bellows may increase the area of the top wall and the bottom wall onto which the pressure from the inflation of the inflatable bellows and the additional inflatable bellows is applied.

It should be understood, that an embodiment of the apparatus may comprise a plurality of inflatable bellows, where some inflatable bellows are arranged on top of each other and where other inflatable bellows are arranged next to each other.

In one embodiment, the inflatable bellows and the additional inflatable bellows may be arranged in joint communication with the inflation medium for simultaneously inflation of the inflatable bellows and the additional inflatable bellows. Thereby it may be ensured that the inflatable bellows and the additional inflatable bellows are equally inflated to thereby exert substantially equal pressure on the top wall and the bottom wall.

The inflation of the inflatable bellows and the additional inflatable bellows may, however, be differently controlled to allow that one of the inflatable bellows and the additional inflatable bellows is inflated more than the other one. This may be particularly interesting when arranged the inflatable bellows and the additional inflatable bellows are arranged on top of each other and/or if the inflatable bellows and the additional inflatable bellows are of different size and/or shape.

According to a second aspect, the invention provides a method of working oppositely arranged first and second surfaces of a pressing section of die cutting machines by means of sanding, polishing, cleaning, and the like by use of an apparatus comprising:
- an upper working unit forming a top wall and an upper sidewall extending downwardly from the top wall;
- a lower working unit forming a bottom wall and a lower sidewall extending upwardly from the bottom wall; and
- an inflatable bellows movable between an inflated state and a deflated state by inflation with an inflation medium;

wherein the upper sidewall is arranged to guide the lower sidewall to thereby form an internal space enclosed by the top wall, the bottom wall, the upper sidewall, and the lower sidewall, and wherein the inflatable bellows is arranged in the internal space;
the method comprising the steps of
   - arranging the upper and lower working units between the first and second surfaces of the pressing section;
   - inflating the inflatable bellows increase the distance between the top wall and the bottom wall by relative movement between the upper sidewall and lower sidewall; and
   - moving the upper and lower working units between the first and second surfaces of the pressing section.

It should be understood, that a skilled person would readily recognise that any feature described in combination with the first aspect of the invention could also be combined with the second aspect of the invention, and vice versa.

The apparatus according to the first aspect of the invention is very suitable for performing the method steps according to the second aspect of the invention. The remarks set forth above in relation to the apparatus are therefore equally applicable in relation to the method.

### Brief description of the drawings

Embodiments of the invention will now be further described with reference to the drawings, in which:
Fig. 1 illustrates an embodiment of an apparatus for working,
Fig. 2 illustrates another view of an embodiment of an apparatus for working,
Fig. 3 illustrates a cross-section through an embodiment of an apparatus for working,
Fig. 4 illustrates parts of an embodiment of an apparatus for working,
Fig. 5 illustrates another view of the embodiment illustrated in Fig. 4,
Fig. 6 illustrates a cross-section through an embodiment of an apparatus for working,
Fig. 7 illustrates an embodiment of an apparatus for working during use, and
Fig. 8 illustrates another embodiment of an apparatus for working.

### Detailed description of the drawings

It should be understood that the detailed description and specific examples, while indicating embodiments of the invention, are given by way of illustration only, since various changes and modifications will become apparent to those skilled in the art from this detailed description.

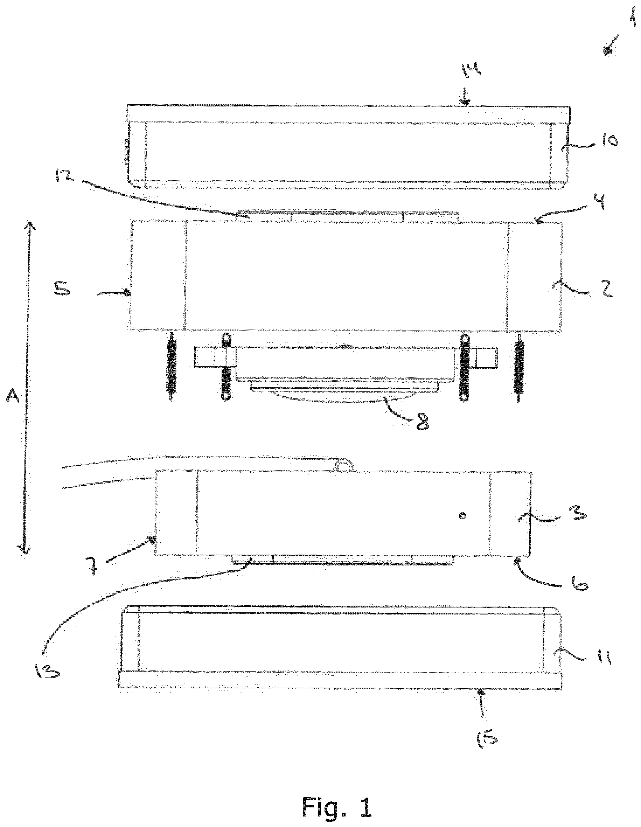

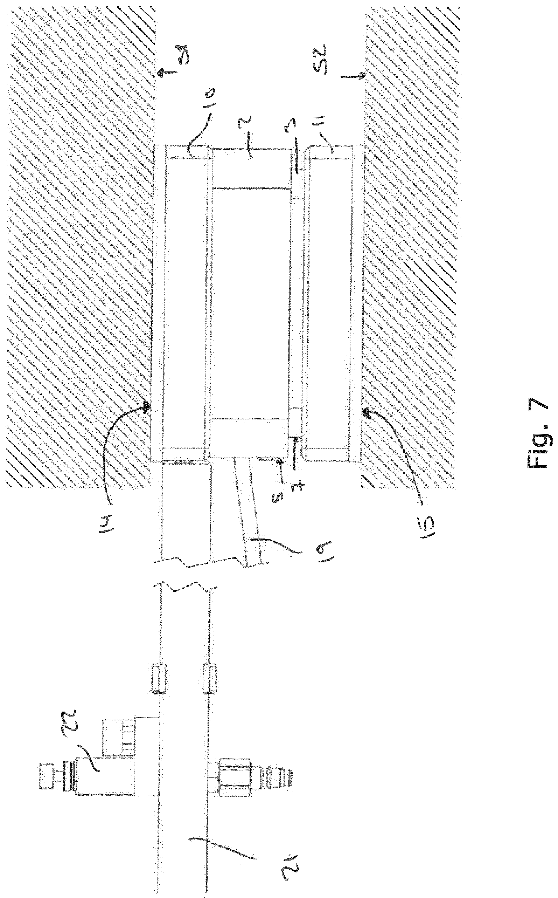

Fig. 1 illustrates an exploited view of an embodiment of an apparatus 1 for working oppositely arranged first S1 and second surfaces S2 (see Fig. 7) of a pressing section. The apparatus 1 comprises an upper working unit 2 and a lower working unit 3, where the upper working unit 2 forms a top wall 4 and an upper sidewall 5 extending downwardly from the top wall 4. The lower working unit 3 forms a bottom wall 6 and a lower sidewall 7 extending upwardly from the bottom wall 6.

The apparatus 1 further comprises an inflatable bellows 8 which is movable between an inflated state and a deflated state by inflation with an inflation medium (not shown), such as compressed air. The illustrated embodiment comprises a single inflatable bellows. It should, however, be understood, that the apparatus 1 may comprise one or more additional inflatable bellows.

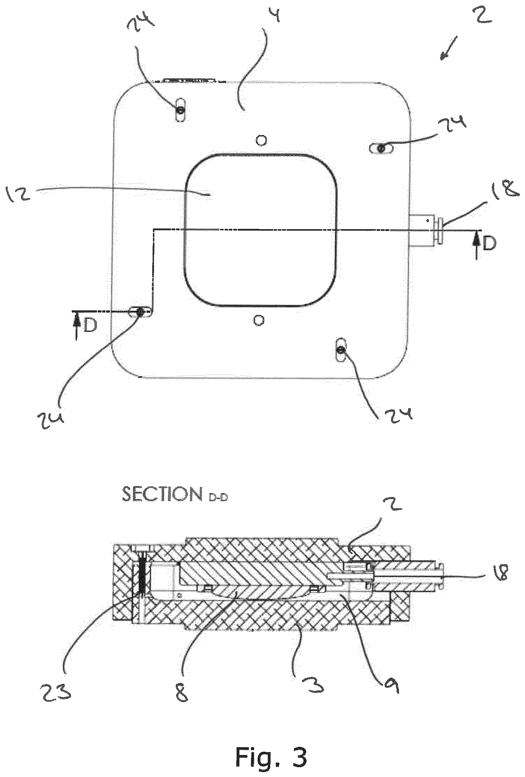

The upper sidewall 5 is arranged to guide the lower sidewall 7 to thereby form an internal space 9 (see Fig. 3) enclosed by the top wall 4, the bottom wall 6, the upper sidewall 5, and the lower sidewall 7. The inflatable bellows 8 is arranged in the internal space 9 to facilitate variation of the distance (indicated by the arrow A) between the top wall 4 and the bottom wall 6 during relative movement between the upper sidewall 5 and lower sidewall 7 by inflation of the inflatable bellows 8.

The distance A between the top wall 4 and the bottom wall 6 may in the illustrated embodiment vary between 25 mm and 50 mm, where the lower value of 25 mm corresponds to the distance A between the top wall 4 and the bottom wall 6 when the inflatable bellows 8 is in the deflated state, whereas the higher value of 50 mm corresponds to the distance A between the top wall 4 and the bottom wall 6 when the inflatable bellows 8 is in the inflated state.

During inflation of the inflatable bellows 8, the upper sidewall 5 and the lower sidewall 7 will move relative to each other by decreasing the overlap between the upper and lower sidewalls 5, 7.

Guiding is achieved by providing the upper working unit 2 and the lower working unit 3 with substantially the same shape and by providing the upper sidewall 5 and the lower sidewall 6 so that the extend parallel to each other whereby at least a part of the lower working unit 3 can be inserted into upper working unit 2 to thereby form the internal space.

In the illustrated embodiment, the apparatus 1 can be arranged between the first and second oppositely arranged surfaces S1, S2 by arranging the bottom wall 6 on the lower one of the first and second surfaces S1, S2 and with the top wall 5 facing the other one of the first and second surfaces S1, S2 (see Fig. 7).

The apparatus 1 further comprises at two separate working elements 10, 11. To facilitate attachment hereof, the upper working unit 2 comprises a first locking structure 12 for attachment of a separate upper working element 10, and the lower working unit 3 comprises a second locking structure 13 for attachment of a separate lower working element 11.

Each of the separate upper and lower working elements 10, 11 comprises a plane working surface; i.e. a plane upper working surface 14 and a plane lower working surface 15. An abrasive paper, a cloth, or other means (not shown) may be attached to the plane upper and lower working surfaces 14, 15 to facilitate working; such as polishing, cleaning, sanding, and the like. The abrasive paper, the cloth, or other suitable material for the working of the surface may as an example be attached by Velcro or by other similar means.

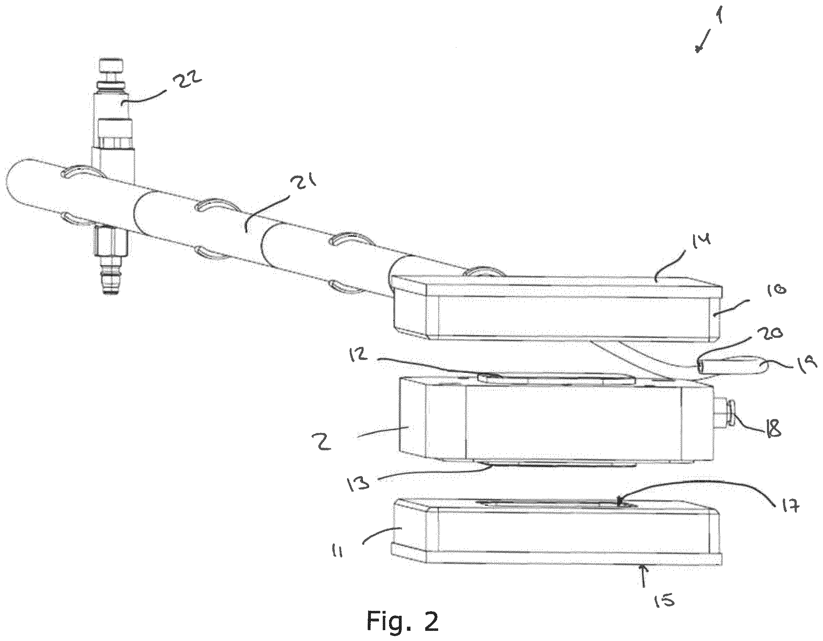

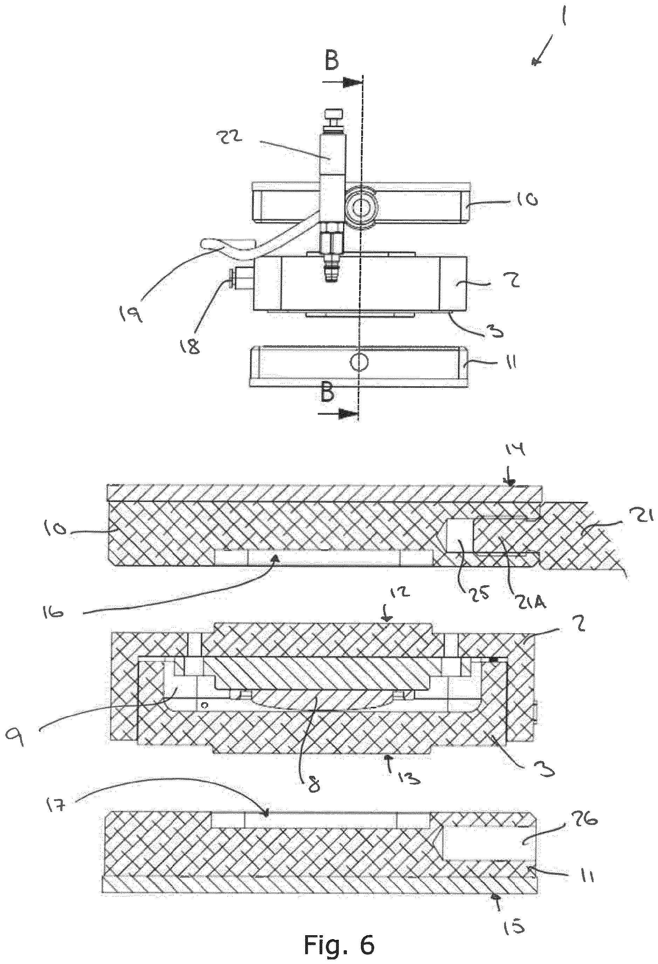

The first and second locking structures 12, 13 comprise a protrusion on the upper working unit 2 and the lower working unit 3. The protrusions 12, 13 match an indentation 16, 17 (see Fig. 2 and Fig. 6) formed in each of the upper and lower working elements 10, 11. As the indentations 16, 17 and the corresponding protrusions 12, 13 are of matching shape, the locking structures prevent relative movement of the upper working element 10 and the upper working unit 2 and prevent relative movement of the lower working element 11 and the lower working unit 3 in a direction transverse to the inflation direction (indicated by the arrow A).

Fig. 2 illustrates an assembled view of the apparatus 1 as illustrated in Fig. 1. To enable inflation of the inflatable bellows 8, a pneumatic component comprising an inflation opening 18 is arranged in the upper working unit 2 thereby provide an inlet for a fluid; i.e. the inflation medium in the form of compressed air enabling inflation of the inflatable bellows 8. A fluid path is provided via the flexible tube 19 having a free end 20 which should be coupled to the inflation opening 18.

To facilitate working, the apparatus 1 further comprises a handle 21 attached to the upper working element 10. In the illustrated embodiment, the handle 21 is formed by an elongated element having a free end at which a user may hold and operate the apparatus 1, and an opposite end being attached to the upper working element 10. The handle 21 comprises a 4-5 parts to facilitate working of different areas of the pressing section (not shown).

Inflation of the inflatable bellows 8 is performed by use of a pneumatic pressure control element 22 arranged at the handle.

Fig. 3 illustrates a cross-section through an embodiment of an apparatus 1 for working. The upper part of Fig. 3 is a top view of the upper working unit 2 illustrating the locking structure in the form of a protrusion 12.

The lower part of Fig. 3 is a cross-section through the upper part of Fig. 3 illustrating the inflatable bellow 8 in a deflated condition in the internal space 9.

As further illustrated, the apparatus 1 comprises a spring structure 23 arranged between upper working unit 2 and the lower working unit 3, where the spring structure 23 biases the top wall 4 towards the bottom wall 6. In the illustrated embodiment, the spring structure 23 comprises four springs 23 being mounted via the openings 24 in the upper working unit 2.

The spring structure 23 has a strength which can be exceeded by inflation of the inflatable bellows 8 to thereby increase the distance between the top wall 4 and the bottom wall 6 by the inflation. The strength of the spring structure 23 is furthermore sufficient to reduce the distance when the pressure applied to inflate the bellows 8 has been removed.

Additionally, the spring structure 23 may ensure that the upper working unit 2 and the lower working unit 3 are kept together, e.g. when the apparatus 1 is moved, prepared for use, not in use, etc.

The spring structure 23 is arranged in the internal space 9, whereby the spring structure 23 is protected by the upper and lower working units 2, 3.

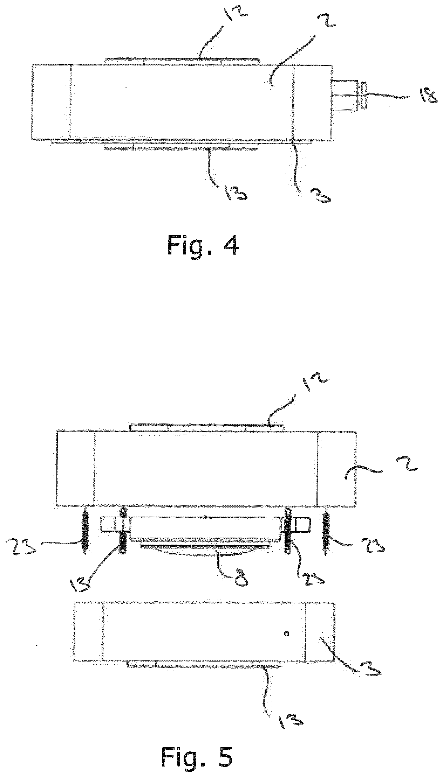

Fig. 4 illustrates a side-view of an apparatus 1 for working, where the side-view corresponds to the cross-section of Fig. 3.

Fig. 5 illustrates an exploited view of the embodiment illustrated in Fig. 4, thereby illustrating four springs 23 and the inflatable bellows 8 arranged between the upper working unit 2 and the lower working unit 3.

The inflatable bellow 8 is in the illustrated embodiment attached to the upper working unit 2. However, it should be understood, that the inflatable bellows 8 may likewise be attached to the lower working unit 3.

Fig. 6 illustrates a cross-section through an embodiment of an apparatus 1 for working. The embodiment is identical to the embodiment illustrated in each of Figs. 1-5. As illustrated in the cross-section, the handle 21 attached to the upper working element 10 by inserting an end part 21A into an opening 25. If desired or needed, the handled 21 may alternatively be attached to the lower working element 11 by inserting the end part 21A into the opening 26. The handle 21 may be fixed by providing an outer treading on the handle which may engage an inner treading provided in the opening 25, 26.

Fig. 7 illustrates an embodiment of an apparatus 1 for working during use. The plane lower working surface 15 is brought into contact with the second surface S2 of the pressing section by position the apparatus with the lower working surface 15 on the second surface S2. The plane upper working surface 14 is brought into contact with the first surface S1 of the pressing section by inflating the inflatable bellow 8 (not shown) whereby the distance between the top wall and the bottom wall is increased, thereby increasing the distance between the plane upper working surface 14 and the plane lower working surface 15.

This can be seen by the fact that the overlap between the upper and lower sidewalls 5, 7 has been decreased thereby making a larger part of the lower working unit 3 visible.

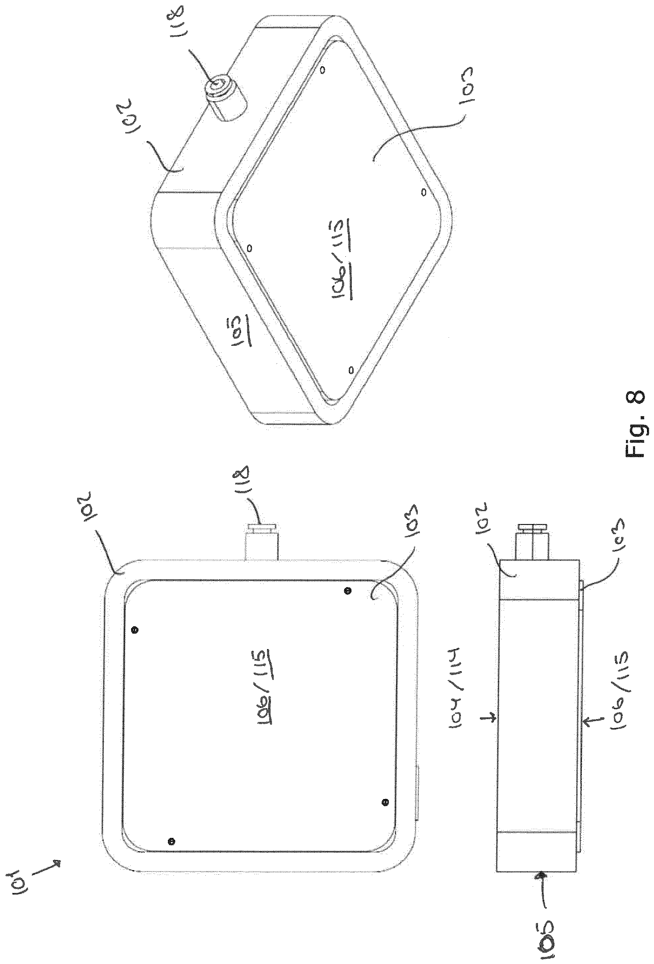

Fig. 8 illustrates different views of an alternative embodiment of an apparatus 101 for working. The apparatus 101 comprises an upper working unit 102 and a lower working unit 103, where the upper working unit 102 forms a top wall 104 and an upper sidewall 105 extending downwardly from the top wall 104. The lower working unit 103 forms a bottom wall 106 and a lower sidewall 107 extending upwardly from the bottom wall 106.

The apparatus 101 further comprises an inflatable bellows (not shown) which is movable between an inflated state and a deflated state by inflation with an inflation medium (not shown), such as compressed air.

The embodiment of the apparatus 101 is similar to the apparatus 1 illustrated in Figs. 1-7. However, in this embodiment, the top wall 104 forms a plane upper working surface 114 and the bottom wall 106 forms a plane lower working surface 115. The top wall 104 and the bottom wall 106 can thereby themselves be used to sand, polish, clean, or otherwise condition the first and second surfaces S1, S2 of the pressing section. An abrasive paper may be attached to the top and/or bottom wall 104/106 to facilitate working. Furthermore, is may be possible to attach a cloth to the top and/or bottom wall 104/106 to facilitate polishing.

Thus, in the illustrated embodiment, separate upper and lower working elements may be omitted.

## Claims

1. Apparatus (1) for working oppositely arranged first (S1) and second (S2) surfaces of a pressing section of die cutting machines by means of sanding, polishing, cleaning, and the like, the apparatus comprising:
- an upper working unit (2, 102) forming a top wall (4, 104) and an upper sidewall (5, 105) extending downwardly from the top wall (4, 104);
- a lower working unit (3, 103) forming a bottom wall (6, 106) and a lower sidewall (7, 107) extending upwardly from the bottom wall (6, 106); and
- an inflatable bellows (8) movable between an inflated state and a deflated state by inflation with an inflation medium;
wherein the upper sidewall (5, 105) is arranged to guide the lower sidewall (7, 107) to thereby form an internal space (9) enclosed by the top wall (4, 104), the bottom wall (6, 106), the upper sidewall (5, 105), and the lower sidewall (7, 107), and wherein the inflatable bellows is arranged in the internal space to facilitate variation of the distance between the top wall (4, 104) and the bottom wall (6, 106) during relative movement between the upper sidewall (5, 105) and lower sidewall (7, 107) by inflation of the inflatable bellows (8).

2. The apparatus according to claim 1, wherein the top wall (4, 104) forms a plane upper working surface (14, 114), and the bottom wall forms a plane lower working surface (15, 115).

3. The apparatus according to claim 1, wherein the upper working unit comprises a first locking structure (12) for attachment of an upper working element (10), and the lower working unit comprises a second locking structure (13) for attachment of a lower working element (11).

4. The apparatus according to claim 3, wherein the first locking structure (12) and the second locking structure (13) each is a geometrical locking structure configured to limit movement of the upper and lower working element (11) relative to the upper and lower working unit, respectively.

5. The apparatus according to claim 3 or 4, wherein the upper working element and the lower working element are releasably attached to the upper working unit and the lower working unit, respectively.

6. The apparatus according to any of the preceding claims, wherein the upper sidewall forms a top edge extending about an opening into an upper cavity, and wherein the lower sidewall extends into the upper cavity.

7. The apparatus according to any of the preceding claims, wherein the lower sidewall forms a bottom edge extending about an opening into a lower cavity, and wherein the inflatable bellows, in the deflated state is arranged within the lower cavity.

8. The apparatus according to any of the preceding claims, wherein the inflatable bellows is fixed to the lower working unit.

9. The apparatus according to any of the preceding claims, further comprising a spring structure (23) arranged between upper working unit and the lower working unit, the spring structure biasing the top wall towards the bottom wall.

10. The apparatus according to claim 9, wherein the spring structure is arranged in the internal space.

11. The apparatus according to any of the preceding claims, further comprising an additional inflatable bellows movable between an inflated state and a deflated state by inflation with an inflation medium, wherein the additional inflatable bellows is arranged in the internal space.

12. The apparatus according to claim 11, wherein the additional inflatable bellows is arranged between the top wall and the inflatable bellows.

13. The apparatus according to claim 11, wherein the additional inflatable bellows is arranged adjacent to the inflatable bellows.

14. The apparatus according to any of claims 11-13, wherein the inflatable bellows and the additional inflatable bellows are arranged in joint communication with the inflation medium for simultaneously inflation of the inflatable bellows and the additional inflatable bellows.

15. A method of working oppositely arranged first and second surfaces of a pressing section of die cutting machines by means of sanding, polishing, cleaning, and the like by use of an apparatus comprising:
- an upper working unit forming a top wall and an upper sidewall extending downwardly from the top wall;
- a lower working unit forming a bottom wall and a lower sidewall extending upwardly from the bottom wall; and
- an inflatable bellows movable between an inflated state and a deflated state by inflation with an inflation medium;
wherein the upper sidewall is arranged to guide the lower sidewall to thereby form an internal space enclosed by the top wall, the bottom wall, the upper sidewall, and the lower sidewall, and wherein the inflatable bellows is arranged in the internal space;
the method comprising the steps of
- arranging the upper and lower working units between the first and second surfaces of the pressing section;
- inflating the inflatable bellows increase the distance between the top wall and the bottom wall by relative movement between the upper sidewall and lower sidewall; and
- moving the upper and lower working units between the first and second surfaces of the pressing section.

## Patentansprüche

1. Vorrichtung (1) zum Bearbeiten von gegenüberliegend angeordneten ersten (S1) und zweiten (S2) Oberflächen eines Pressteilabschnitts von Stanzmaschinen mittels Schleifen, Polieren, Reinigen und dergleichen, wobei die Vorrichtung umfasst:
- eine obere Arbeitseinheit (2, 102), die eine obere Wand (4, 104) und eine obere Seitenwand (5, 105) ausbildet, welche sich von der oberen Wand (4, 104) nach unten erstreckt;
- eine untere Arbeitseinheit (3, 103), die eine untere Wand (6, 106) und eine untere Seitenwand (7, 107) ausbildet, welche sich von der unteren Wand (6, 106) nach oben erstreckt; und
- einen aufblasbaren Balg (8), der zwischen einem aufgeblasenen Zustand und einem entleerten Zustand durch Aufblasen mit einem Aufblasmedium beweglich ist;
wobei die obere Seitenwand (5, 105) zum Führen der unteren Seitenwand (7, 107) angeordnet ist, um dadurch einen Innenraum (9) auszubilden, der durch die obere Wand (4, 104), die untere Wand (6, 106), die obere Seitenwand (5, 105) und die untere Seitenwand (7, 107) eingeschlossen ist, und wobei der aufblasbare Balg im Innenraum zum Ermöglichen von Variation des Abstands zwischen der oberen Wand (4, 104) und der unteren Wand (6, 106) während relativer Bewegung zwischen der oberen Seitenwand (5, 105) und unteren Seitenwand (7, 107) durch Aufblasen des aufblasbaren Balgs (8) angeordnet ist.

2. Vorrichtung nach Anspruch 1, wobei die obere Wand (4, 104) eine plane obere Arbeitsfläche (14, 114) ausbildet und die untere Wand eine plane untere Arbeitsfläche (15, 115) ausbildet.

3. Vorrichtung nach Anspruch 1, wobei die obere Arbeitseinheit eine erste Sperrstruktur (12) zur Anbringung eines oberen Arbeitselements (10) umfasst und die untere Arbeitseinheit eine zweite Sperrstruktur (13) zur Anbringung eines unteren Arbeitselements (11) umfasst.

4. Vorrichtung nach Anspruch 3, wobei die erste Sperrstruktur (12) und die zweite Sperrstruktur (13) jede eine geometrische Sperrstruktur ist, die zum Begrenzen von Bewegung des oberen bzw. unteren Arbeitselements (11) bezüglich der oberen bzw. unteren Arbeitseinheit konfiguriert ist.

5. Vorrichtung nach Anspruch 3 oder 4, wobei das obere Arbeitselement bzw. das untere Arbeitselement lösbar an der oberen Arbeitseinheit bzw. der unteren Arbeitseinheit angebracht ist.

6. Vorrichtung nach einem der vorhergehenden Ansprüche, wobei die obere Seitenwand eine obere Kante ausbildet, die sich um eine Öffnung in einen oberen Hohlraum erstreckt, und wobei sich die untere Seitenwand in den oberen Hohlraum erstreckt.

7. Vorrichtung nach einem der vorhergehenden Ansprüche, wobei die untere Seitenwand eine untere Kante ausbildet, die sich um eine Öffnung in einen unteren Hohlraum erstreckt, und wobei der aufblasbare Balg im entleerten Zustand innerhalb des unteren Hohlraums angeordnet ist.

8. Vorrichtung nach einem der vorhergehenden Ansprüche, wobei der aufblasbare Balg an der unteren Arbeitseinheit befestigt ist.

9. Vorrichtung nach einem der vorhergehenden Ansprüche, ferner umfassend eine Federstruktur (23), die zwischen der oberen Arbeitseinheit und der unteren Arbeitseinheit angeordnet ist, wobei die Federstruktur die obere Wand zur unteren Wand hin vorspannt.

10. Vorrichtung nach Anspruch 9, wobei die Federstruktur im Innenraum angeordnet ist.

11. Vorrichtung nach einem der vorhergehenden Ansprüche, ferner umfassend einen zusätzlichen aufblasbaren Balg, der zwischen einem aufgeblasenen Zustand und einem entleerten Zustand durch Aufblasen mit einem Aufblasmedium beweglich ist, wobei der zusätzliche aufblasbare Balg im Innenraum angeordnet ist.

12. Vorrichtung nach Anspruch 11, wobei der zusätzliche aufblasbare Balg zwischen der oberen Wand und dem aufblasbaren Balg angeordnet ist.

13. Vorrichtung nach Anspruch 11, wobei der zusätzliche aufblasbare Balg dem aufblasbaren Balg benachbart angeordnet ist.

14. Vorrichtung nach einem der Ansprüche 11 bis 13, wobei der aufblasbare Balg und der zusätzliche aufblasbare Balg in gemeinsamer Verbindung mit dem Aufblasmedium zum gleichzeitigen Aufblasen des aufblasbaren Balgs und des zusätzlichen aufblasbaren Balgs angeordnet sind.

15. Verfahren zum Bearbeiten von gegenüberliegend angeordneten ersten und zweiten Oberflächen eines Pressteilabschnitts von Stanzmaschinen mittels Schleifen, Polieren, Reinigen und dergleichen unter Benutzung einer Vorrichtung, welche umfasst:
- eine obere Arbeitseinheit, die eine obere Wand und eine obere Seitenwand ausbildet, welche sich von der oberen Wand nach unten erstreckt;
- eine untere Arbeitseinheit, die eine untere Wand und eine untere Seitenwand ausbildet, welche sich von der unteren Wand nach oben erstreckt; und
- einen aufblasbaren Balg, der zwischen einem aufgeblasenen Zustand und einem entleerten Zustand durch Aufblasen mit einem Aufblasmedium beweglich ist;
wobei die obere Seitenwand zum Führen der unteren Seitenwand angeordnet ist, um dadurch einen Innenraum auszubilden, der durch die obere Wand, die untere Wand, die obere Seitenwand und die untere Seitenwand eingeschlossen ist, und wobei der aufblasbare Balg im Innenraum angeordnet ist;
wobei das Verfahren die folgenden Schritte umfasst:
- Anordnen der oberen und unteren Arbeitseinheit zwischen der ersten und zweiten Oberfläche des Pressteilabschnitts;
- Aufblasen des aufblasbaren Balgs zum Erhöhen des Abstands zwischen der oberen Wand und der unteren Wand durch relative Bewegung zwischen der oberen Seitenwand und unteren Seitenwand; und
- Bewegen der oberen und unteren Arbeitseinheit zwischen der ersten und zweiten Oberfläche des Pressteilabschnitts.

## Revendications

1. Appareil (1) d'usinage de première (S1) et seconde (S2) surfaces disposées à l'opposé d'une section de compression de machines de découpage par sablage, polissage, nettoyage et similaires en utilisant un appareil comprenant :
- une unité fonctionnelle supérieure (2,102) formant une paroi supérieure (4,104) et une paroi latérale supérieure (5,105) s'étendant vers le bas depuis la paroi supérieure (4,104) ;
- une unité fonctionnelle inférieure (3,103) formant une paroi inférieure (6,106) et une paroi latérale inférieure (7,107) s'étendant vers le haut depuis la paroi inférieure (6,106) ; et
- un soufflet gonflable (8) permutable entre un état gonflé et un état dégonflé par gonflage avec un fluide de gonflage,
la paroi latérale supérieure (5,105) étant conçue pour guider la paroi latérale inférieure (7,107) pour former ainsi un espace interne (9) circonscrit par la paroi supérieure (4,104), la paroi inférieure (6,106), la paroi latérale supérieure (5,105) et la paroi latérale inférieure (7,107), et le soufflet gonflable étant disposé dans l'espace interne de manière à faciliter la variation de la distance entre la paroi supérieure (4,104) et la paroi inférieure (6,106) pendant le mouvement relatif entre la paroi latérale supérieure (5,105) et la paroi latérale inférieure (7,107) par gonflage du soufflet gonflable (8).

2. Appareil selon la revendication 1, dans lequel la paroi supérieure (4,104) forme une surface fonctionnelle supérieure plane (14,114), et la paroi inférieure forme une surface fonctionnelle inférieure plane (15,115).

3. Appareil selon la revendication 1, dans lequel l'unité fonctionnelle supérieure comprend une première structure de verrouillage (12) pour la fixation d'un élément fonctionnel supérieur (10), et l'unité fonctionnelle inférieure comprend une seconde structure de verrouillage (13) pour la fixation d'un élément fonctionnel inférieur (11).

4. Appareil selon la revendication 3, dans lequel la première structure de verrouillage (12) et la seconde structure de verrouillage (13) sont chacune une structure de verrouillage géométrique pour limiter le mouvement de l'élément fonctionnel supérieur et inférieur (11) par rapport à l'unité fonctionnelle supérieure et inférieure respectivement.

5. Appareil selon la revendication 3 ou 4, dans lequel l'élément fonctionnel supérieur et l'élément fonctionnel inférieur sont fixés de manière dissociable à l'unité fonctionnelle supérieure et à l'unité fonctionnelle inférieure respectivement.

6. Appareil selon l'une quelconque des revendications précédentes, dans lequel la paroi latérale supérieure forme un bord supérieur s'étendant autour d'une ouverture dans une cavité supérieure, et la paroi latérale inférieure s'étend dans la cavité supérieure.

7. Appareil selon l'une quelconque des revendications précédentes, dans lequel la paroi latérale inférieure forme un bord inférieur s'étendant autour d'une ouverture dans une cavité inférieure, et le soufflet gonflable, en état dégonflé, est disposé dans la cavité inférieure.

8. Appareil selon l'une quelconque des revendications précédentes, dans lequel le soufflet gonflable est fixé à l'unité fonctionnelle inférieure.

9. Appareil selon l'une quelconque des revendications précédentes, comprenant en outre une structure à ressort (23) disposée entre une unité fonctionnelle supérieure et l'unité fonctionnelle inférieure, la structure à ressort inclinant la paroi supérieure vers la paroi inférieure.

10. Appareil selon la revendication 9, dans lequel la structure à ressort est disposée dans l'espace interne.

11. Appareil selon l'une quelconque des revendications précédentes, comprenant en outre un soufflet gonflable supplémentaire permutable entre un état gonflé et un état dégonflé par gonflage avec un fluide de gonflage, le soufflet gonflable supplémentaire étant disposé dans l'espace interne.

12. Appareil selon la revendication 11, dans lequel le soufflet gonflable supplémentaire est disposé entre la paroi supérieure et le soufflet gonflable.

13. Appareil selon la revendication 11, dans lequel le soufflet gonflable supplémentaire est disposé de manière à être adjacent au soufflet gonflable.

14. Appareil selon l'une quelconque des revendications 11 à 13, dans lequel le soufflet gonflable et le soufflet gonflable supplémentaire sont disposés en communication conjointe avec le fluide de gonflage pour le gonflage simultané du soufflet gonflable et du soufflet gonflable supplémentaire.

15. Procédé d'usinage de première et seconde surfaces d'une section de compression de machines de découpage par sablage, polissage, nettoyage et similaires, cet appareil comprenant :
- une unité fonctionnelle supérieure formant une paroi supérieure et une paroi latérale supérieure s'étendant vers le bas depuis la paroi supérieure ;
- une unité fonctionnelle inférieure formant une paroi inférieure et une paroi latérale inférieure s'étendant vers le haut depuis la paroi inférieure ; et
- un soufflet gonflable permutable entre un état gonflé et un état dégonflé par gonflage avec un fluide de gonflage,
la paroi latérale supérieure étant conçue pour guider la paroi latérale inférieure pour former ainsi un espace interne circonscrit par la paroi supérieure, la paroi inférieure, la paroi latérale supérieure et la paroi latérale inférieure, et le soufflet gonflable étant disposé dans l'espace interne ;
ce procédé comprenant les étapes suivantes :
- disposition des unités fonctionnelles supérieure et inférieure entre les première et seconde surfaces de la section de compression ;
- gonflage du soufflet gonflable pour augmenter la distance entre la paroi supérieure et la paroi inférieure par un mouvement relatif entre la paroi latérale supérieure et la paroi latérale inférieure ; et
- permutation des unités fonctionnelles supérieure et inférieure entre les première et seconde surfaces de la section de compression.
